(19) Europäisches Patentamt
European Patent Office
Office européen des brevets

(11) **EP 2 648 353 A1**

(12) **EUROPEAN PATENT APPLICATION**

(43) Date of publication:
**09.10.2013 Bulletin 2013/41**

(51) Int Cl.:
***H04J 14/06*** *(2006.01)*

(21) Application number: **12163018.0**

(22) Date of filing: **03.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
 • **Dorize, Christian**
 **91620 Nozay (FR)**

 • **Bigo, Sébastien**
 **91620 Nozay (FR)**

(74) Representative: **Loyer & Abello**
 **9, rue Anatole de la Forge**
 **75017 Paris (FR)**

Remarks:
 Amended claims in accordance with Rule 137(2) EPC.

(54) **Optical packet transmission with polarization division multiplexing**

(57)    A method for generating an optical packet, comprises:

generating a header of the optical packet, wherein the header comprises a modulated single-polarization optical carrier wave (21, 22), and
generating a payload (23) of the optical packet, wherein the payload comprises a polarization division multiplexed optical signal obtained by combining first and second polarized optical carrier wave components into a propagation medium, wherein the first and second polarized optical carrier wave components have mutually orthogonal states of polarization,
wherein the generating of the header comprises generating a baseband header signal and
modulating at least one of the two polarized optical carrier wave components with the baseband header signal to form the modulated single-polarization optical carrier wave (21, 22),
wherein the baseband header signal has a predefined high-frequency signature. An optical receiver uses the high-frequency signature or signatures of the header for robust packet arrival detection.

FIG.3

EP 2 648 353 A1

## Description

### Field of the invention

The invention relates to the technical field of optical communication systems using optical packets or bursts, and in particular to optical packet transmissions using polarization division multiplexing.

### Background

Optical packets transmission in long haul and metropolitan networks is an emerging technology that potentially offers more flexibility compared to the usual optical circuit transmission: traffic fluctuation can be handled more efficiently by dynamically placing data packets, from every source node to every destination node, at available time slots. Therefore, packet transmission allows for an efficient filling of the information on the optical link and is suitable for fast traffic change. By applying optical packet transmission to a WDM network, a wavelength division multiplexed (WDM) channel may transport packets inserted at various nodes in the network and to be extracted at various destination nodes also.

The insertion of the optical packets at very accurate time slots at all network nodes is a strong requirement to ensure the synchronization of such a system. To cope with inevitable deviations resulting from network synchronization inaccuracies and to electronic limitations of the packet insertion cards, each packet must be preceded by a preamble that helps the destination node detect its exact arrival time. High detection performances, in terms of false alarm rate and miss rate, are required to achieve the Bit Error Rate (BER) targeted in packet transmission, e.g. typically $BER<10^{-9}$.

On the one hand, a packet arrival detection failure (miss case) leads to the loss of the entire information packet. On the other hand, detecting a packet by mistake (false alarm case) may temporarily load the detection system with unnecessary processing tasks that may diminish the ability to detect the subsequent arrival of a packet.

The association of optical packet transmission with polarization division multiplexing (PDM) is receiving attention for the development of high data-rate, highly flexible communication systems. EP-A-2273700 teaches methods for speeding up convergence of a polarization demultiplexing filter in a coherent receiver adapted to optical packet reception. These methods involve the generation of optical packets comprising a header section including a single-polarization optical signal and a payload section including a polarization division multiplexed optical signal. To generate such an optical packet, EP-A-2273700 teaches methods that require turning on and off the drivers of Mach-Zehnder (MZ) modulators and changing the bias of MZ modulators at a very high speed between the header section and payload section. A header section of the optical packet comprises a constant signal to facilitate carrier frequency estimation.

### Summary

In an embodiment, the invention provides a method for generating an optical packet, comprising:

generating a header of the optical packet, wherein the header comprises a modulated single-polarization optical carrier wave, and
generating a payload of the optical packet, wherein the payload comprises a polarization division multiplexed optical signal obtained by combining first and second polarized optical carrier wave components into a propagation medium, wherein the first and second polarized optical carrier wave components have mutually orthogonal states of polarization,
wherein the generating of the header comprises generating a baseband header signal and modulating at least one of the two polarized optical carrier wave components with the baseband header signal to form the modulated single-polarization optical carrier wave, wherein the baseband header signal has a predefined high-frequency signature.

According to embodiments, such a method may comprise one or more of the features below:

In an embodiment, the baseband header signal comprises a high-frequency binary signal comprising a periodical sequence of bits having a predefined period.

In an embodiment, the baseband header signal comprises an analog sine wave having a predefined frequency.
In an embodiment, the generating of the header comprises:

generating first and second baseband header signals having the predefined high-frequency signature,
modulating the first polarized optical carrier wave component in accordance with the first baseband header signal,
modulating the second polarized optical carrier wave component in accordance with the second baseband header signal,

and combining the first and second polarized optical carrier wave components into the propagation medium, wherein the first and second baseband signals are generated in a correlated manner, so that the polarized optical carrier wave components combine as the modulated single-polarization optical carrier wave, wherein the state of polarization of the modulated single-polarization optical carrier wave is a linear combination of said mutually orthogonal states of polarization.

In embodiments, the first and second baseband digital signals are equal or opposite.

In embodiments, the first polarized optical carrier wave component and the second polarized optical carrier wave component have a linear polarization state and the resulting single-polarization optical carrier wave also has a linear polarization state. Alternatively, the polarized optical carrier wave components may have other states of polarization, e.g. circular.

In embodiments, the polarized optical carrier wave components are phase-modulated.

In embodiments, the phase modulation is a QPSK modulation.

In embodiments, the modulating is performed with Mach-Zehnder modulators.

In an embodiment, the header comprises a first header section and a second header section successively in time, wherein the first header section comprises a first single-polarization optical carrier wave in a first state of polarization and the second header section comprises a second single-polarization optical carrier wave in a second state of polarization orthogonal to the first state of polarization, wherein the generating of the header comprises:

generating a first baseband header signal having a first predefined high-frequency signature and a second baseband header signal having a second predefined high-frequency signature,
modulating at least one of the two polarized optical carrier wave components with the first baseband header signal to form the first header section, and
modulating at least one of the two polarized optical carrier wave components with the second baseband header signal to form the second header section.

In an embodiment, the first and second predefined high-frequency signatures have different dominant frequencies.

The frequency of the signature should be preferably high enough to allow fast detection of a packet arrival event, i.e. within a detection time that is no more than a small fraction of the packet duration. In an embodiment, a dominant frequency of the (or each) high-frequency signature is higher than 100 MHz, preferably higher than 1 GHz.

In an embodiment, the invention also provides an optical transmitter for generating a polarization division multiplexed optical packet, the transmitter comprising:

a baseband signal generation module for generating first and second baseband digital signals,
a first modulator for modulating a first polarized optical carrier wave component in accordance with the first baseband digital signal
a second modulator for modulating a second polarized optical carrier wave component in accordance with the second baseband digital signal, wherein the first and second polarized optical carrier wave components have mutually orthogonal states of polarization,
an optical combiner for combining the first and second optical carrier wave components into a propagation medium,
a packet forming module for forming the first and second polarized optical carrier wave components as an optical packet, and
a header forming means for forming a header of the optical packet comprising a modulated single-polarization optical carrier wave,
wherein the baseband signal generation module is adapted to generate a baseband header signal having a predefined high-frequency signature to form the modulation of the single-polarization optical carrier wave of the header.

In an embodiment, the baseband signal generation module is adapted to operate in a first operating mode to generate the single-polarization optical carrier wave of the header and in a second operating mode to generate a payload of the optical packet comprising a polarization division multiplexed signal,
wherein the baseband signal generation module in the first operating mode generates the first and second baseband digital signals in a correlated manner so that the modulated optical carrier wave components are combined as a modulated single-polarization optical carrier wave having a constant state of polarization in the propagation medium and,
wherein the baseband signal generation module in the second operating mode generates the first and second baseband digital signals in an essentially uncorrelated manner so that the modulated optical carrier wave components are combined as a polarization division multiplexed optical signal having a data-dependently varying state of polarization.

In the above embodiment, the baseband signal generation module operating in the first operating mode constitutes a header forming means. In that case, the single-polarization optical carrier wave of the header results from a respective superimposition of the two polarized optical carrier wave components.

Alternatively, there are other ways of forming a single- polarization header section, e.g. by selectively extinguishing one of the two optical carrier wave components with controlled optical gates or the like. In EP- A- 2273700 a single- polarization header section is obtained by biasing a Mach- Zehnder modulator at minimum transmission. In that case, the single- polarization optical carrier wave of each header section corresponds to a respective one of the two polarized optical carrier wave components.

In an embodiment, the invention also provides an optical receiver for receiving a polarization division multiplexed optical packet, the optical receiver comprising:

a coherent optical detection unit comprising a polarization beam splitter, coherent mixers and light detectors arranged to generate a first detection signal corresponding to a first polarized component of an incoming optical signal and a second detection signal corresponding to a second polarized component of the incoming optical signal,
a signal processing unit adapted to process the first and second detection signals,
wherein the signal processing unit comprises a packet arrival detector adapted to process the first and second detection signals to detect a predefined high frequency signature and to generate a packet arrival detection signal in response to detecting the predefined high frequency signature.

An optical receiver in accordance with claim 10, wherein the packet arrival detector is adapted to process the detection signals by Fourier transform.

In an embodiment, the packet arrival detector is adapted to process the detection signals by Discrete Fourier transform at a predefined high frequency.

In an embodiment, the packet arrival detector is adapted to detect the (or each) predefined high frequency signature by comparing an energy of a detection signal corresponding to a predefined high frequency to a predefined threshold.

In an embodiment, the packet arrival detector is adapted to process the first and second detection signals to detect a first predefined high frequency signature and a second predefined high frequency signature that are successive in time and to generate the packet arrival detection signal in response to detecting both predefined high frequency signatures.

In an embodiment, the packet arrival detector is adapted, in response to detecting the first high frequency signature, to determine a respective energy corresponding to the first predefined high frequency signature in the first and second detection signals and to select the detection signal having the lower respective energy, and to generate the packet arrival detection signal in response to detecting the second predefined high frequency signature in the selected detection signal.

In an embodiment, the packet arrival detector is adapted to detect the first predefined high frequency signature by comparing an energy of the detection signals corresponding to a first predefined high frequency to a first predefined threshold and to detect the second predefined high frequency signature by comparing an energy of the detection signals corresponding to a second predefined high frequency to a second predefined threshold.

In an embodiment, the first and second predefined thresholds of the packet arrival detector are predefined to obtain a miss rate and a false-detection rate that are substantially equal.

Aspects of the invention are based on the idea of generating header signals for optical packets having a PDM payload that enable to detect packet arrival events with a high degree of speed and reliability. Aspects of the invention are based on the idea of proposing a packet arrival detector dedicated to optical packet transmission that offers high detection performances, in line with the BER required in optical packet transmission.

**Brief description of the drawings**

These and other aspects of the invention will be apparent from and elucidated with reference to the embodiments described hereinafter, by way of example, with reference to the drawings.

Figure 1 is a functional representation of PDM optical transmitter in accordance with an embodiment.
Figure 2 is a schematic representation of an optical packet that can be obtained with the transmitter of Fig. 1.
Figure 3 is a schematic representation of an optical packet header comprising two high-frequency signatures successive in time.
Figure 4 is a functional representation of a signal processing system for a coherent optical receiver in accordance with an embodiment.
Figure 5 is a flow diagram showing a detection method carried out by a packet arrival detector in an embodiment.

**Detailed description of the embodiments**

There will now be described an embodiment of an optical packet transmitter for polarization division multiplex signal that enables to send respective packet header signals on two distinct polarizations prior to a PDM payload signal.

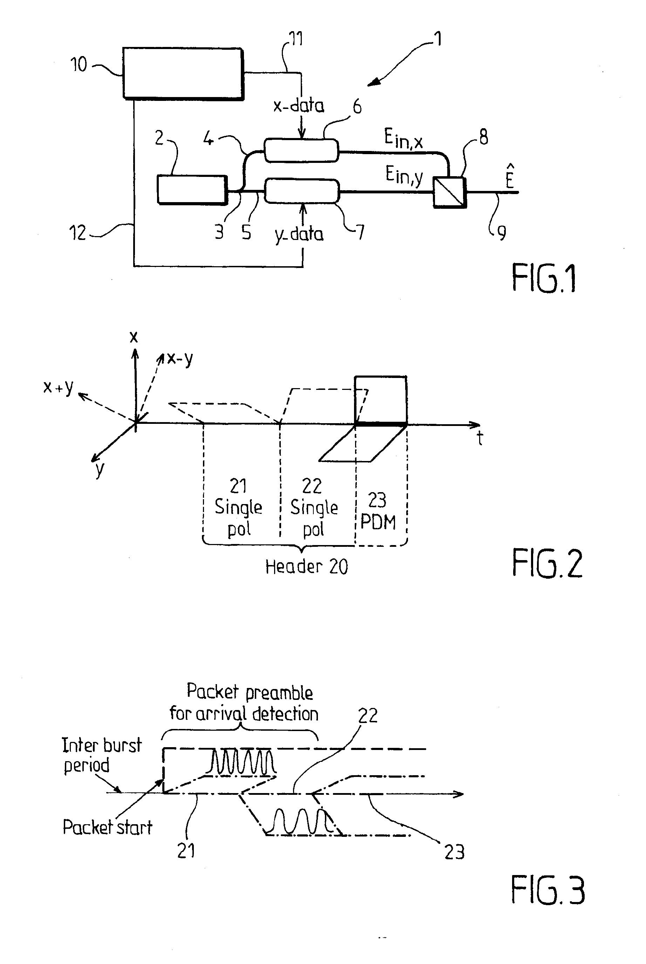

With reference to Figure 1, the optical transmitter 1 adapted to generate a PDM optical signal is schematically shown. Transmitter 1 comprises a laser source 2 to generate an optical carrier wave at a selected wavelength suitable for WDM transmissions. A beam splitter 3 splits the optical carrier wave into two carrier wave components propagating in respective waveguides 4 and 5. A respective optical modulator 6 and 7 is arranged on each of the waveguides 4 and 5 to impart a modulation on the corresponding carrier wave component as a function of respective baseband signals 11 and 12, which are generated by a baseband signal generator 10 at the same data-rate. Optical modulators 6 and 7 may be any type of modulators. In a preferred embodiment, optical modulators 6 and 7 are MZ modulator arrangements adapted to generate PSK modulations, e.g. Binary Phase-Shift Keying or Quaternary Phase Shift Keying. Such arrangements are known in the art. In particular, the baseband signals 11 and 12 may comprise NRZ-coded signals driving MZ modulators so that each signal transition causes a 90° or 180° phase-shift in a corresponding carrier wave component.

At the output of waveguides 4 and 5, a polarization beam combiner 8 selects an x-polarized component of the modulated carrier wave component coming from waveguide 4 and a y-polarized component of the modulated carrier wave component coming from waveguide 5 and superposes both polarized components into an output waveguide 9, e.g. an optical fiber connected to a communications network. As used herein, x and y refer to two orthogonal states of polarization defined by the physical structure of the polarization beam combiner 8, as known in the art.

In Fig. 1, the modulated carrier wave component coming from waveguide 4 is denoted by $E_{in,x}$ and the corresponding baseband signal 11 is denoted by x-data. In Fig. 1, the modulated carrier wave component coming from waveguide 5 is denoted by $E_{in,y}$ and the corresponding baseband signal 12 is denoted by y-data.

As a result, the optical signal $\hat{E}$ transmitted in the output waveguide 9 can be expressed as:

$$\widehat{E} = E_{in,x}\hat{x} + E_{in,y}\hat{y}, \quad (1)$$

where ^ denote a vector.

In ordinary PDM transmissions, this principle is used to transfer essentially independent streams of data on the respective field components $E_{in,x}$ and $E_{in,y}$ so as to substantially double the data-rate compared to a single-polarization transmission at the same baseband rate. As a result, the SOP of the output optical signal $\hat{E}$ keeps changing and the instantaneous SOP depends on the data-streams x-data and y-data at any given instant.

However, it is observed that when the data- streams are equal, Eq. (1) can be rewritten:

$$\widehat{E} = E_{in,x}(\hat{x} + \hat{y}), \quad (2)$$

i.e. the SOP of the output signal $\hat{E}$ is constant and the output signal $\hat{E}$ is a linearly polarized field along direction $\hat{x} + \hat{y}$.

In the same manner, it is observed that when the data-streams are mutually opposite, Eq. (1) can be rewritten:

$$\widehat{E} = E_{in,x}(\hat{x} - \hat{y}), \quad (3)$$

i.e. the SOP of the output signal $\hat{E}$ is constant and the output signal $\hat{E}$ is a linearly polarized field along direction $\hat{x}$-$\hat{y}$.

Therefore, it is observed that optical transmitter 10 can be operated to generate a single polarization signal along direction $\hat{x}+\hat{y}$ or a single polarization signal along direction $\hat{x}$-$\hat{y}$ or a dual- polarization optical signal just by changing the binary content of the baseband signals 11 and 12 without modifying the operating point of the modulators 6 and 7.

The above principle can be exploited to generate optical packets having a PDM payload preceded by a single-polarization header. The packet header may include one single-polarization section or two different single-polarization sections having orthogonal SOPs. An embodiment of such a packet header 20 with three sections is schematically shown on Fig. 2 as a function of time.

In Fig. 2, header section 21 comprises a linearly polarized field along direction $\hat{x}+\hat{y}$, header section 22 comprises a linearly polarized field along direction $\hat{x}$-$\hat{y}$, whereas 23 denotes a packet payload. Alternatively, PDM section 23 can include a PDM header section. It will be appreciated that the only operation required in the transmitter 10 between each subsequent header section or between the packet header and packet payload amounts to changing the binary content of baseband signals 11 and 12. Such change is made in the electrical domain and can be performed at a very high speed without creating impairments in the optical signal. In addition, by superimposing both correlated field components, it will be appreciated that a resulting output power and OSNR are improved compared to a single field component.

To generate the optical signal Ê in the form of optical packets, optical transmitter 10 comprises a packet shaper (not shown) in the form of a semiconductor optical amplifier (SOA) or other optical gate arranged within laser source 2, between laser source 2 and beam splitter 3 or at any other suitable location.

Turning now to Fig. 3, it is shown that the above described transmitter can serve to send header sections 21 and 22 having a distinct spectral signature onto each of the two linear polarizations $(\hat{x}+\hat{y})$ and $(\hat{x}-\hat{y})$. The spectral signature is obtained by selecting a suitable baseband signal for each header section, e.g. a baseband signal having a quasi-monochromatic spectrum at a distinct high-frequency.

In a first embodiment, the baseband signals having a distinct spectral signature are binary signals. For instance, a baseband signal having a first spectral signature is the periodical sequence 00110011 for the first polarization. Hence the first spectral signature has a peak of energy at the baud rate of the QPSK transmitter, e.g. 25 GHz. A baseband signal having a second spectral signature is for instance 0000111100001111 for the second polarization. Hence the second spectral signature has a peak of energy at half the baud rate of the QPSK transmitter, e.g. 12.5 GHz. More generally, any pair of frequencies that are related by a factor $2^p$, where p is an integer, will facilitate detection by discrete Fourier transform, although this condition is not mandatory.

The duration of each header signal, in number of symbols, is determined according to the performances of the detector under the worst conditions of transmission envisioned at the receiver side. Prior to the PDM payload 23, which comprises distinct symbols simultaneously sent onto the two polarizations, the double spectral signature contained in the single-polarization packet header sections serves for packet arrival detection, as will be described below. The packet header may further comprise other patterns dedicated to other tasks, such as initialization of a polarization demultiplexing filter as described in EP-A-2273700.

In a second embodiment, the baseband signals having a distinct spectral signature are analog sine waves, so as to minimize harmonic components in the spectral response and to concentrate the entire signal energy onto a single peak. A sketch of such harmonic header sections is shown in Figure 3. To generate such modulation, the baseband module in the transmitter may include a digital-to-analog converter. The frequencies of the two sine waves should be distinct and high enough to enable fast detection, e.g. higher than 1 GHz.

The above embodiments of single-polarization header sections 21 and 22 use the linear polarizations $(\hat{x}+\hat{y})$ and $(\hat{x}-\hat{y})$. Alternatively, the linear polarizations $(\hat{x})$ and $(\hat{y})$ could be used for the respective header sections, e.g. by temporarily turning off the signal on the other polarization.

In all cases, a first information burst having a spectral signature f_H is generated on a first polarization Pol_H followed by a second information burst with a spectral signature f_V, different from the first one, on a second, orthogonal polarization Pol_V. Each signature has been chosen to provide an easy to recognize information in the spectral domain, e.g. essentially a spectral peak at frequency f_H on the first polarization Pol_H and at frequency f_V on the orthogonal polarization Pol_V. At the receiver side, the spectral signatures of the baseband signals are detected to achieve packet arrival detection.

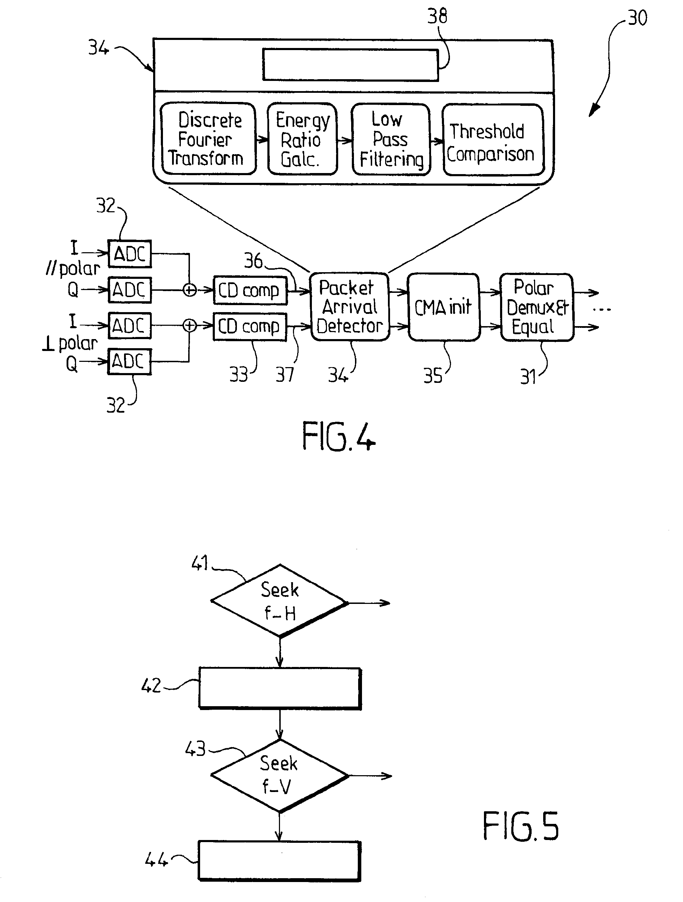

Turning now to Fig. 4, an optical packet receiver 30 for PDM transmissions is schematically depicted. The receiver 30 comprises an optical section not shown that typically includes a polarization beam splitter (PBS) to split a received optical signal into a first optical wave denoted // in Fig. 4 and a second optical wave denoted ⊥ in Fig. 4, with the polarizations of the first and second optical waves being orthogonal. Since the axes of the PBS are not aligned with the polarization axes of the transmitter 1, the signals of the first and second optical waves typically do not correspond to the two signals of the PDM signal as transmitted. This misalignment is later compensated by a polarization demultiplexing filter 31 in the digital signal processing part of the receiver 30. The first optical wave is superimposed with an LO signal in a first coherent mixer not shown, whereas the second optical wave is superimposed with an LO signal in a second coherent mixer, not shown.

The mixers output in-phase (I) and quadrature-phase (Q) components which are optical-to-electrical converted by optical-to-electrical converters, not shown. Afterwards, the four signal components are analog-to-digital converted by analog-to-digital converters (ADCs) 32. The further processing of the signal components is performed in the digital signal processing part of the receiver, e.g. in a DSP (digital signal processor), which comprises several functional modules depicted on Fig. 4, namely chromatic dispersion compensation filter 33, packet arrival detector 34, CMA initialization module 35, polarization demultiplexing filter 31 and others.

Since the packet header sections carrying the spectral signatures are single-polarization waves, the optical detection carried out by the coherent mixers makes it possible to obtain electrical detection signals that closely correspond to the initial baseband signals, i.e. without a polarization demultiplexing step. The packet arrival detector 34 processes the detection signals thus obtained to seek the expected spectral signatures and exploit the detection of such signatures as a packet arrival detection event.

In an embodiment, this is achieved by means of a procedure depicted in Fig. 5.

In step 41, the first signature f_H is sought jointly on both detection signals 36 and 37 corresponding to received polarizations // and ⊥. For that purpose, a Discrete Fourier Transform (DFT) is performed at the frequency f_H to periodically estimate the energy at that frequency compared to the overall signal energy. The output is low pass-filtered by, for example averaging within a sliding time window or recursive filtering, then compared to a first threshold Th_fH.

If the first threshold is exceeded for at least one of the two detection signals 36 and 37, i.e. one of the two received polarizations, the packet arrival detector switches to the search for the second signature f_V.

At step 42, a selection step serves to select the received polarization (i.e. the corresponding detection signal) that showed the lowest energy level for the first signature f_H. This selection improves the sensitivity of the subsequent detection step since the two spectral signatures f_H and f_V should be respectively dominant on two mutually orthogonal polarizations.

At step 43, the second signature f_V is sought on the selected detection signal in the same manner as the first signature in step 41, using a second threshold Th_fV.

At step 44 if the second threshold Th_fV related to the second signature f_V is exceeded during a predefined time window, then the decision of a packet arrival is made.

The packet arrival detection module 34 comprises a memory module 38 in which the relevant parameters of the process are stored, i.e. frequency values to be sought and threshold values Th_fH and Th_fV.

The step 41 corresponds to a pre-detection by recognition of the first spectral signature. The step 43 corresponds to a confirmation of the detection by the recognition of the second spectral signature after a time period in accordance with the preamble structure generated by the transmitter.

Preferably, the two thresholds Th_ fH and Th_ fV are adjusted so that detector provides a miss rate and a false alarm rate that are substantially equal.

For that purpose, the first threshold Th_fH used in the pre-detection step is set to a rather low value, so as to tolerate a rather high false alarm rate (FA1) and very low nondetection rate (ND1), i.e. to almost never miss any packet arrival. The second threshold Th_fV used in the confirmation step is set to filter the false alarms generated by the pre-detection step. The resulting performances of the packet arrival detector can be modeled as follows:

$$P_{FA} = P_{FA1} * P_{FA2} \qquad\qquad (1)$$

$$P_{ND} = P_{ND1} + (1 - P_{ND1}) * P_{ND2} \approx P_{ND1} + P_{ND2} \qquad (2)$$

$$P_{FA} = P_{ND} \qquad\qquad (3)$$

The threshold values that will satisfy conditions (1), (2) and (3) can be determined by experiment or mathematically under statistical assumptions, such as AWGN assumptions.

In a network simulation, the above packet arrival detection method makes it possible to achieve a very low rate of miss events and false alarm events, e.g. one per day, to achieve a BER below $10^{-9}$ while coping with a $Q^2$ factor down to 9 dB and keeping the header short. Detection performances as good as one optical packet loss per day can be achieved for the foreseen range of OSNR (>9 dBs).

In PDM transmissions, x-data and y-data are generated as independent data streams that do not have a long-lasting correlation. However, coding techniques and protocol functions can create temporary correlations between signals, i.e. as a result of redundancy coding, frame retransmissions, etc.

Elements such as the control units and signal generation modules could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A method for generating an optical packet, comprising:

   generating a header (20) of the optical packet, wherein the header comprises a modulated single-polarization optical carrier wave, and
   generating a payload (23) of the optical packet, wherein the payload comprises a polarization division multiplexed optical signal obtained by combining first and second polarized optical carrier wave components into a propagation medium, wherein the first and second polarized optical carrier wave components have mutually orthogonal states of polarization,
   wherein the generating of the header comprises generating a baseband header signal (11, 12) and modulating at least one of the two polarized optical carrier wave components with the baseband header signal to form the modulated single-polarization optical carrier wave (21, 22),
   wherein the baseband header signal (11, 12) has a predefined high-frequency signature.

2. A method in accordance with claim 1, wherein the baseband header signal (11, 12) comprises a high-frequency binary signal comprising a periodical sequence of bits having a predefined period.

3. A method in accordance with claim 1, wherein the baseband header signal (11, 12) comprises an analog sine wave having a predefined frequency.

4. A method in accordance with any one of claims 1 to 3, wherein the generating of the header (20) comprises:

   generating first and second baseband header signals (11, 12) having the predefined high-frequency signature,
   modulating the first polarized optical carrier wave component in accordance with the first baseband header signal (11),
   modulating the second polarized optical carrier wave component in accordance with the second baseband header signal (12),
   and combining the first and second polarized optical carrier wave components into the propagation medium,
   wherein the first and second baseband signals are generated in a correlated manner, so that the polarized optical carrier wave components combine as the modulated single-polarization optical carrier wave (21, 22),
   wherein the state of polarization of the modulated single-polarization optical carrier wave is a linear combination of said mutually orthogonal states of polarization.

5. A method in accordance with any one of claims 1 to 4, wherein the header comprises a first header section (21) and a second header section (22) successively in time, wherein the first header section comprises a first single-polarization optical carrier wave in a first state of polarization and the second header section comprises a second single-polarization optical carrier wave in a second state of polarization orthogonal to the first state of polarization, wherein the generating of the header comprises:

   generating a first baseband header signal having a first predefined high-frequency signature and a second baseband header signal having a second predefined high-frequency signature,
   modulating at least one of the two polarized optical carrier wave components with the first baseband header signal to form the first header section (21), and
   modulating at least one of the two polarized optical carrier wave components with the second baseband header signal to form the second header section (22).

6. A method in accordance with claim 5, wherein the first and second predefined high-frequency signatures have different dominant frequencies.

7. A method in accordance with any one of claims 1 to 6, wherein a dominant frequency of the high-frequency signature is higher than 1 GHz.

8. An optical transmitter (1) for generating a polarization division multiplexed optical packet, comprising:

   a baseband signal generation module (10) for generating first and second baseband digital signals (11, 12),
   a first modulator (6) for modulating a first polarized optical carrier wave component in accordance with the first baseband digital signal (11)

a second modulator (7) for modulating a second polarized optical carrier wave component in accordance with the second baseband digital signal (12), wherein the first and second polarized optical carrier wave components have mutually orthogonal states of polarization,

an optical combiner (8) for combining the first and second optical carrier wave components into a propagation medium,

a packet forming module (2) for forming the first and second polarized optical carrier wave components as an optical packet, and

a header forming means for forming a header (20) of the optical packet comprising a modulated single-polarization optical carrier wave,

wherein the baseband signal generation module (10) is adapted to generate a baseband header signal having a predefined high-frequency signature to form the modulation of the single-polarization optical carrier wave of the header (20).

9. An optical transmitter in accordance with claim 8, wherein the baseband signal generation module (10) is adapted to operate in a first operating mode to generate the single- polarization optical carrier wave of the header (20) and in a second operating mode to generate a payload of the optical packet comprising a polarization division multiplexed signal (23),

wherein the baseband signal generation module in the first operating mode generates the first and second baseband digital signals (11, 12) in a correlated manner so that the modulated optical carrier wave components are combined as a modulated single- polarization optical carrier wave having a constant state of polarization in the propagation medium and,

wherein the baseband signal generation module in the second operating mode generates the first and second baseband digital signals (11, 12) in an essentially uncorrelated manner so that the modulated optical carrier wave components are combined as a polarization division multiplexed optical signal having a data- dependently varying state of polarization.

10. An optical receiver (30) for receiving a polarization division multiplexed optical packet, the optical receiver comprising:

a coherent optical detection unit comprising a polarization beam splitter, coherent mixers and light detectors arranged to generate a first detection signal (36) corresponding to a first polarized component of an incoming optical signal and a second detection signal (37) corresponding to a second polarized component of the incoming optical signal,

a signal processing unit (31 to 35) adapted to process the first and second detection signals,

wherein the signal processing unit comprises a packet arrival detector (34) adapted to process the first and second detection signals to detect a predefined high frequency signature and to generate a packet arrival detection signal in response to detecting the predefined high frequency signature.

11. An optical receiver in accordance with claim 10, wherein the packet arrival detector (34) is adapted to process the detection signals by Discrete Fourier transform at a predefined high frequency.

12. An optical receiver in accordance with any one of claims 10 to 11, wherein the packet arrival detector (34) is adapted to process the first and second detection signals (36, 37) to detect (41, 43) a first predefined high frequency signature and a second predefined high frequency signature that are successive in time and to generate (44) the packet arrival detection signal in response to detecting both predefined high frequency signatures.

13. An optical receiver in accordance with claim 12, wherein the packet arrival detector (34) is adapted, in response to detecting the first high frequency signature, to determine a respective energy corresponding to the first predefined high frequency signature in the first and second detection signals and to select (42) the detection signal having the lower respective energy, and to generate (44) the packet arrival detection signal in response to detecting (43) the second predefined high frequency signature in the selected detection signal.

14. An optical receiver in accordance with claim 13, wherein the packet arrival detector (34) is adapted to detect (41) the first predefined high frequency signature by comparing an energy of the detection signals corresponding to a first predefined high frequency to a first predefined threshold and to detect (43) the second predefined high frequency signature by comparing an energy of the detection signals corresponding to a second predefined high frequency to a second predefined threshold.

15. An optical receiver in accordance with claim 14, wherein the first and second predefined thresholds of the packet arrival detector (34) are predefined to obtain a miss rate and a false-detection rate that are substantially equal.

**Amended claims in accordance with Rule 137(2) EPC.**

**1.** A method for generating an optical packet, comprising:

generating a header (20) of the optical packet, wherein the header comprises a modulated single-polarization optical carrier wave, and

generating a payload (23) of the optical packet, wherein the payload comprises a polarization division multiplexed optical signal obtained by combining first and second polarized optical carrier wave components into a propagation medium, wherein the first and second polarized optical carrier wave components have mutually orthogonal states of polarization,

wherein the generating of the header comprises generating a baseband header signal (11, 12) and modulating at least one of the two polarized optical carrier wave components with the baseband header signal to form the modulated single-polarization optical carrier wave (21, 22),

the method being **characterized in that** the baseband header signal (11, 12) has a predefined high-frequency monochromatic spectral signature at a dominant frequency higher than 100 MHz.

**2.** A method in accordance with claim 1, wherein the baseband header signal (11, 12) comprises a high-frequency binary signal comprising a periodical sequence of bits having a predefined period.

**3.** A method in accordance with claim 1, wherein the baseband header signal (11, 12) comprises an analog sine wave having a predefined frequency.

**4.** A method in accordance with any one of claims 1 to 3, wherein the generating of the header (20) comprises:

generating first and second baseband header signals (11, 12) having the predefined high-frequency spectral signature,

modulating the first polarized optical carrier wave component in accordance with the first baseband header signal (11),

modulating the second polarized optical carrier wave component in accordance with the second baseband header signal (12),

and combining the first and second polarized optical carrier wave components into the propagation medium,

wherein the first and second baseband signals are generated in a correlated manner, so that the polarized optical carrier wave components combine as the modulated single-polarization optical carrier wave (21, 22), wherein the state of polarization of the modulated single-polarization optical carrier wave is a linear combination of said mutually orthogonal states of polarization.

**5.** A method in accordance with any one of claims 1 to 4, wherein the header comprises a first header section (21) and a second header section (22) successively in time, wherein the first header section comprises a first single-polarization optical carrier wave in a first state of polarization and the second header section comprises a second single-polarization optical carrier wave in a second state of polarization orthogonal to the first state of polarization, wherein the generating of the header comprises:

generating a first baseband header signal having a first predefined high-frequency spectral signature and a second baseband header signal having a second predefined high-frequency spectral signature,

modulating at least one of the two polarized optical carrier wave components with the first baseband header signal to form the first header section (21), and

modulating at least one of the two polarized optical carrier wave components with the second baseband header signal to form the second header section (22).

**6.** A method in accordance with claim 5, wherein the first and second predefined high-frequency spectral signatures have different dominant frequencies.

**7.** A method in accordance with any one of claims 1 to 6, wherein a dominant frequency of the high-frequency spectral signature is higher than 1 GHz.

**8.** An optical transmitter (1) for generating a polarization division multiplexed optical packet, comprising:

a baseband signal generation module (10) for generating first and second baseband digital signals (11, 12),
a first modulator (6) for modulating a first polarized optical carrier wave component in accordance with the first baseband digital signal (11)
a second modulator (7) for modulating a second polarized optical carrier wave component in accordance with the second baseband digital signal (12), wherein the first and second polarized optical carrier wave components have mutually orthogonal states of polarization,
an optical combiner (8) for combining the first and second optical carrier wave components into a propagation medium,
a packet forming module (2) for forming the first and second polarized optical carrier wave components as an optical packet, and
a header forming means for forming a header (20) of the optical packet comprising a modulated single-polarization optical carrier wave,
the optical transmitter being **characterized in that** the baseband signal generation module (10) is adapted to generate a baseband header signal having a predefined high-frequency monochromatic spectral signature at a dominant frequency higher than 100 MHzto form the modulation of the single-polarization optical carrier wave of the header (20).

**9.** An optical transmitter in accordance with claim 8, wherein the baseband signal generation module (10) is adapted to operate in a first operating mode to generate the single- polarization optical carrier wave of the header (20) and in a second operating mode to generate a payload of the optical packet comprising a polarization division multiplexed signal (23),
wherein the baseband signal generation module in the first operating mode generates the first and second baseband digital signals (11, 12) in a correlated manner so that the modulated optical carrier wave components are combined as a modulated single- polarization optical carrier wave having a constant state of polarization in the propagation medium and, wherein the baseband signal generation module in the second operating mode generates the first and second baseband digital signals (11, 12) in an essentially uncorrelated manner so that the modulated optical carrier wave components are combined as a polarization division multiplexed optical signal having a data- dependently varying state of polarization.

**10.** An optical receiver (30) for receiving a polarization division multiplexed optical packet, the optical receiver comprising:

a coherent optical detection unit comprising a polarization beam splitter, coherent mixers and light detectors arranged to generate a first detection signal (36) corresponding to a first polarized component of an incoming optical signal and a second detection signal (37) corresponding to a second polarized component of the incoming optical signal,
a signal processing unit (31 to 35) adapted to process the first and second detection signals, the optical receiver being **characterized in that** the signal processing unit comprises a packet arrival detector (34) adapted to process the first and second detection signals by Discrete Fourier transform at a predefined high frequency to detect a predefined high frequency spectral signature having a dominant frequency higher than 100 MHz and to generate a packet arrival detection signal in response to detecting the predefined high frequency spectral signature.

**11.** An optical receiver in accordance with of claim 10, wherein the packet arrival detector (34) is adapted to process the first and second detection signals (36, 37) to detect (41, 43) a first predefined high frequency spectral signature and a second predefined high frequency spectral signature that are successive in time and to generate (44) the packet arrival detection signal in response to detecting both predefined high frequency spectral signatures.

**12.** An optical receiver in accordance with claim 11, wherein the packet arrival detector (34) is adapted, in response to detecting the first high frequency spectral signature, to determine a respective energy corresponding to the first predefined high frequency spectral signature in the first and second detection signals and to select (42) the detection signal having the lower respective energy, and to generate (44) the packet arrival detection signal in response to detecting (43) the second predefined high frequency spectral signature in the selected detection signal.

**13.** An optical receiver in accordance with claim 12, wherein the packet arrival detector (34) is adapted to detect (41) the first predefined high frequency spectral signature by comparing an energy of the detection signals corresponding to a first predefined high frequency to a first predefined threshold and to detect (43) the second predefined high frequency spectral signature by comparing an energy of the detection signals corresponding to a second predefined high frequency to a second predefined threshold.

**14.** An optical receiver in accordance with claim 13, wherein the first and second predefined thresholds of the packet arrival detector (34) are predefined to obtain a miss rate and a false-detection rate that are substantially equal.

FIG.1

FIG.2

FIG.3

FIG.4

FIG.5

EP 2 648 353 A1

Europäisches
Patentamt
European
Patent Office
Office européen
des brevets

# EUROPEAN SEARCH REPORT

Application Number

EP 12 16 3018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 2 273 700 A1 (ALCATEL LUCENT [FR]) 12 January 2011 (2011-01-12) * abstract * * paragraphs [0060] - [0066], [0101] - [0105] * * figures 1,4 * | 1-15 | INV. H04J14/06 |
| Y | TAREK S EL-BAWAB ET AL: "Optical Packet Switching in Core Networks: Between Vision and Reality", IEEE COMMUNICATIONS MAGAZINE, IEEE SERVICE CENTER, PISCATAWAY, US, vol. 40, no. 9, 1 September 2002 (2002-09-01), pages 60-65, XP011092911, ISSN: 0163-6804 * page 63, left-hand column, line 17 - page 63, right-hand column, line 18 * | 1-15 | |
| A | EP 1 271 993 A2 (TRW INC [US]) 2 January 2003 (2003-01-02) * abstract * * paragraphs [0006], [0014] - [0020] * * figures 1,2 * | 1-15 | TECHNICAL FIELDS SEARCHED (IPC) H04J H04B H04Q |

The present search report has been drawn up for all claims

| Place of search | Date of completion of the search | Examiner |
|---|---|---|
| Munich | 4 October 2012 | Hamer, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 12 16 3018

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2012

| Patent document cited in search report | | Publication date | Patent family member(s) | | Publication date |
|---|---|---|---|---|---|
| EP 2273700 | A1 | 12-01-2011 | NONE | | |
| EP 1271993 | A2 | 02-01-2003 | EP 1271993 A2 | | 02-01-2003 |
| | | | JP 2003124882 A | | 25-04-2003 |
| | | | US 2002191251 A1 | | 19-12-2002 |

For more details about this annex : see Official Journal of the European Patent Office, No. 12/82

**EP 2 648 353 A1**

**Patent documents cited in the description**

- EP 2273700 A